# EUROPEAN PATENT APPLICATION

(11) **EP 1 594 169 A2**
(43) Date of publication of application: **09.11.2005**
(21) Application number: 05009472.1
(22) Date of filing: 29.04.2005
(51) Int. Cl.: H01L 31/048, H01L 31/02

(54) **A terminal box for a solar battery module, a rectifying-device unit and a method of assembling a terminal box**

(30) Priority: 07.05.2004 JP 2004138951; 03.08.2004 JP 2004227030; 09.11.2004 JP 2004325246
(71) Applicant: Sumitomo Wiring Systems, Ltd., Yokkaichi-City, Mie, 510-8503 (JP)
(72) Inventor: Higashikozono, Makoto, Yokkaichi-city Mie 510-8503 (JP); Yoshikawa, Hiroyuki, Yokkaichi-city Mie 510-8503 (JP); Kiryu, Masuhiro, Yokkaichi-city Mie 510-8503 (JP)
(74) Representative: Müller-Boré & Partner Patentanwälte

(57) **Abstract**

An object of the present invention is to ensure good heat discharging characteristics.

A terminal box for a solar battery module is provided with a plurality of terminal plates 30 juxtaposed on a base plate 11 and connectable with positive and negative electrodes of the solar battery module, cables for external connection connectable with the terminal plates 30, and rectifying-device units 50 each of which spans between two corresponding terminal plates 30. Each rectifying-device unit 50 includes a bypass diode 52 connectable with the two corresponding terminal plates 30 to prevent an inverse current, and a metal-made clip 53 for resiliently holding the bypass diode 52. The clip 53 is held in contact with a heat discharging plate 55 of the bypass diode 52 to discharge heat generated by the bypass diode 52.

## Description

The present invention relates to a terminal box for a solar battery module, a rectifying-device unit and to a method of assembling such a terminal box.

A solar energy generation system is constructed to supply direct-current electricity from a solar battery panel laid on the roof of a house to the respective electric equipments via an inverter or the like. The solar battery panel is comprised of a plurality of solar battery modules, and electrodes of the respective solar battery modules are connected in series or in parallel via terminal boxes.

A known terminal box is constructed such that terminal plates are arranged adjacent to each other in a box, ends of the terminal plates at one side being connectable with positive and negative electrodes drawn out from the underside of the solar battery module and the other ends thereof being connectable with cables for external connection, and bypass diodes span between adjacent terminal plates (see, for example, Japanese Patent Publication No. 3498945). The bypass diode is for shorting an inverse current at the time of an inverse load from one cable for external connection to the other and comprised of a chip-shaped diode functioning portion and a pair of conductor pieces connected with the diode functioning portion while holding the diode functioning portion therebetween. The respective conductor pieces have contact portions with the diode functioning portion between their superimposed portions, extend in opposite directions from the contact portions, and have their extending ends connected with the corresponding terminal plates, for example, by soldering.

In the above construction, heat generated by the diode functioning portion cannot be efficiently discharged. Some of known diodes packaged by resin sealing are provided heat discharging plates, wherein heat can be discharged by way of such heat discharging plates. However, since the heat discharging plates themselves are not very large, it has been difficult to ensure sufficient heat discharging characteristics only by the heat discharging plates.

The present invention was developed in view of the above problem and an object thereof is to ensure good heat discharging characteristics.

This object is solved according to the invention by the features of the independent claims. Preferred embodiments of the invention are subject of the dependent claims.

According to the invention, there is provided a terminal box for a solar battery module, comprising:
a base plate,
a plurality of terminal plates on the base plate and connectable with positive and negative electrodes of the solar battery module via cables for external connection connectable with the terminal plates, and
a rectifying-device unit spanning between two corresponding terminal plates,
wherein the rectifying-device unit includes at least one rectifying device particularly for bypass at the time of an inverse load, the rectifying device being connectable with each of the two corresponding terminal plates, and a heat discharging member, being preferably made of metal, for holding the rectifying device in contact therewith.

Since the (preferably metal-made) heat discharging member is provided to hold the rectifying device in contact therewith, heat generated by the rectifying device can be efficiently discharged by way of the heat discharging member. Further, since the rectifying device and the heat discharging member preferably are integrally united into the rectifying-device unit, mountability onto the base plate is better.

According to a preferred embodiment of the invention, there is provided a terminal box for a solar battery module, comprising:
a base plate,
a plurality of terminal plates juxtaposed on the base plate and connectable with positive and negative electrodes of the solar battery module,
cables for external connection connectable with the terminal plates, and
a rectifying-device unit spanning between two corresponding terminal plates,
wherein the rectifying-device unit includes a rectifying device for bypass at the time of an inverse load, the rectifying device being connected with each of the two corresponding terminal plates, and a metal-made heat discharging member for holding the rectifying device in contact therewith.

Preferably, the heat discharging member includes a pair of supporting pieces for resiliently holding the at least one rectifying device therebetween.

Since the heat discharging member includes a pair of supporting pieces for resiliently holding the rectifying device therebetween, it can cope with a plurality of kinds of rectifying devices having different sizes, thereby realizing better versatility. Further, since it is sufficient to hold the rectifying device between a pair of supporting pieces, operation load can be reduced. Of course, soldering may be applied between the rectifying device and the supporting pieces or a heat discharging pad member made of a metal may be provided therebetween. This further betters heat discharging characteristics.

Further preferably, the rectifying device is at least partly packaged by resin sealing with a heat discharging portion, preferably a heat discharging plate, exposed at its outer surface, and the heat discharging member can be brought into contact with the heat discharging portion (preferably plate).

Since the heat discharging member can be brought into contact with the heat discharging portion (preferably plate) of the rectifying device, a heat transfer property from the heat discharging portion (plate) to the heat discharging member is better.

Still further preferably, the heat discharging member includes at least one engaging portion resiliently engageable with at least one respective engageable portion of the base plate, and the rectifying-device unit is positionable or positioned on the base plate by the resilient engagement of the engaging portion and the engageable portion.

Since the rectifying-device unit is positioned on the base plate by the resilient engagement of the engaging portion and the engageable portion, it can be mounted on the base plate through a one-touch operation.

Further preferably, a plurality of rectifying devices are provided on the base plate, and one heat discharging member is provided for each rectifying device.

Since one heat discharging member is provided for each rectifying device, the rectifying-device unit can be mounted on the base plate in more diverse manners as compared to a case where a plurality of rectifying devices are collectively held by one heat discharging member. Accordingly, it is, for example, possible to connect some of a plurality of adjacent terminal plates by the rectifying-device unit and to connect the remaining ones by jumper pins.

Most preferably, a plurality of rectifying devices are provided on the base plate and are collectively held by the one heat discharging member.

Since a plurality of rectifying devices are collectively held by one heat discharging member, it is not necessary to provide one heat discharging member for each rectifying device and the rectifying devices can be easily mounted.

According to a further preferred embodiment of the invention, the rectifying device is at least partly packaged by resin sealing, and the heat discharging member is so shaped as to extend substantially along a preexisting stepped part of the rectifying device and has a holding surface to be abutted against this stepped part.

Since the holding surface of the heat discharging member is so shaped as to extend substantially along the preexisting stepped part and to be abutted against the stepped part, the heat discharging member is also held in contact with the stepped part, thereby increasing a heat discharging area, and joining strength of the rectifying device and the heat discharging member can be increased.

Preferably, the rectifying device is at least partly packaged by resin sealing, the heat discharging member includes a boss portion to be at least partly inserted into a preexisting hole of the rectifying device, and the rectifying device is mounted on the heat discharging member by way of the boss portion.

Since the rectifying device is mounted on the heat discharging member by inserting the boss portion of the heat discharging member into the preexisting hole of the rectifying device, the rectifying device can be easily mounted.

Further preferably, the heat discharging member includes a pair of divided members, and the rectifying device is tightly held between the facing surfaces of the two divided members by uniting the divided members.

Since the heat discharging member includes a pair of divided members and the rectifying device is tightly held between the facing surfaces of the two divided members by uniting the two divided members, the rectifying device can be more securely held.

Further preferably, the two divided members are formed with through holes coaxially penetrating the divided members in such a state where the rectifying device is held, and a screw member inserted through the through holes is screwed into a screw receiving portion of the base plate, thereby fastening the rectifying device by way of the two divided members.

The rectifying device is fastened by way of the two divided members by inserting the screw member through the through holes of the two divided members and screwing the leading end of the screw member into the screw receiving portion of the base plate. Thus, the rectifying device can be more securely held and can be fixed to the base plate as the rectifying device is fastened.

Still further preferably, wherein the rectifying device is mounted on the heat discharging member by a screw.

The rectifying device can be more strongly and securely held on the heat discharging member by the screw.

Still further preferably, a through hole is so formed in a surface of the base plate where the heat discharging member is to be placed as to communicate with the solar battery module, and a heat transferring portion is at least partly provided inside this through hole.

Since the heat transferring portion is at least partly provided between the heat discharging member and the solar battery module, heat generated by the rectifying device can be efficiently discharged toward the solar battery module by way of the heat transferring portion.

Further preferably, the heat transferring portion includes a heat discharging block integral or unitary to the heat discharging member.

Since the heat transferring portion includes the heat discharging block integral to the heat discharging member, heat generated by the rectifying device can be more efficiently discharged toward the solar battery module by way of the heat transferring portion.

Still further preferably, an end surface of the heat discharging block substantially faces a surface of the base plate to be mounted on the solar battery module.

Since the end surface of the heat discharging block substantially faces the surface of the base plate to be mounted on the solar battery module, heat generated by the rectifying device can be directly discharged from the heat discharging block toward the solar battery module. Further, in the case of adhering the base plate to the solar battery module, an amount of adhesive to be applied can be reduced.

Most preferably, the heat transferring portion includes an adhesive member having a good heat conductivity.

Since the heat transferring portion includes an adhesive having a good heat conductivity, the adhesive having a good heat conductivity applied to the lower surfaces of the heat discharging member and the base plate can be used as the heat transferring portion without using any special member as such. Here, the adhesive having a good heat conductivity means an adhesive having a higher heat conductivity at least than a member forming the base plate. For example, a ceramic adhesive, an epoxy adhesive or the like can be used as such an adhesive.

According to a preferred embodiment of the invention, the heat discharging member is formed with a heat dissipation portion, preferably at least one fin, for discharging heat.

Since the heat discharging member is formed with a heat dissipation portion, preferably at least one fin, for discharging heat, a heat discharging outer surface is increased and an air flow is better.

Most preferably, the heat discharging member is made of an aluminum or an aluminum alloy.

Since the heat discharging member is made of a metal having a high heat conductivity such as an aluminum or an aluminum alloy, heat discharging characteristics are even better.

According to the invention, there is further provided a rectifying-device unit spanning between two corresponding ones of a plurality of terminal plates (preferably substantially juxtaposed) on or near a base plate, connectable with positive and negative electrodes of a solar battery module and connectable with cables for external connection, comprising:
a rectifying device particularly for bypass at the time of an inverse load, the rectifying device being connectable or connected with each of the two corresponding terminal plates, and
a (preferably metal-made) heat discharging member for holding the rectifying device in contact therewith.

Since the (preferably metal-made) heat discharging member is provided to hold the rectifying device in contact therewith, heat generated by the rectifying device can be efficiently discharged by way of the heat discharging member. Further, since the rectifying device and the heat discharging member are integrally united into the rectifying-device unit, mountability onto the base plate is better.

According to a preferred embodiment of the invention, the heat discharging member includes a pair of supporting pieces for resiliently holding the rectifying device therebetween.

Since the heat discharging member includes a pair of supporting pieces for resiliently holding the rectifying device therebetween, it can cope with a plurality of kinds of rectifying devices having different sizes, thereby realizing better versatility. Further, since it is sufficient to hold the rectifying device between a pair of supporting pieces, operation load can be reduced. Of course, soldering may be applied between the rectifying device and the supporting pieces or a heat discharging pad member made of a metal may be provided therebetween. This further betters heat discharging characteristics.

Preferably, the rectifying device is packaged by resin sealing with a heat discharging portion, preferably a heat discharging plate, at least partly exposed at its outer surface, and the heat discharging member can be brought into contact with the heat discharging portion (preferably plate).

Since the heat discharging member can be brought into contact with the heat discharging portion (preferably plate) of the rectifying device, a heat transfer property from the heat discharging portion (plate) to the heat discharging member is better.

According to the invention, there is further provided a method of assembling a terminal box, in particular according to the invention or a preferred embodiment thereof, for a solar battery module, comprising:
providing a base plate,
arranging a plurality of terminal plates on or near the base plate and connectable with positive and negative electrodes of the solar battery module via cables for external connection connectable with the terminal plates, and
providing a rectifying-device unit spanning between two corresponding terminal plates, wherein the rectifying-device unit includes at least one rectifying device particularly for bypass at the time of an inverse load, the rectifying device being connected with each of the two corresponding terminal plates, and
holding the rectifying device in contact with a heat discharging member being preferably made of metal.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a plan view showing an internal construction of a box main body according to a first embodiment of the invention,
FIGS. 2(A) and 2(B) are sections of a clip before and after a bypass diode is mounted therein,
FIG. 3 is a schematic exploded section of the box main body,
FIG. 4 is a schematic section of the box main body,
FIG. 5 is a plan view of a rectifying-device unit,
FIG. 6 is a view corresponding to FIG. 1 showing a modification,
FIG. 7 is a view corresponding to FIG. 1 showing a reference example,
FIG. 8 is a plan view showing an internal construction of a box main body according to a second embodiment of the invention,
FIG. 9 is a plan view showing an internal construction of a box main body according to a third embodiment of the invention,
FIG. 10 is a schematic exploded section of the box main body,
FIG. 11 is a schematic section of the box main body,
FIG. 12 is a plan view showing an internal constriction of a box main body according to a fourth embodiment of the invention,
FIG. 13 is a schematic exploded section of the box main body,
FIG. 14 is a schematic section of the box main body,
FIG. 15 is a view corresponding to FIG. 12 showing a modification, and
FIG. 16 is a schematic section showing a fifth embodiment of the invention.

### <First Embodiment>

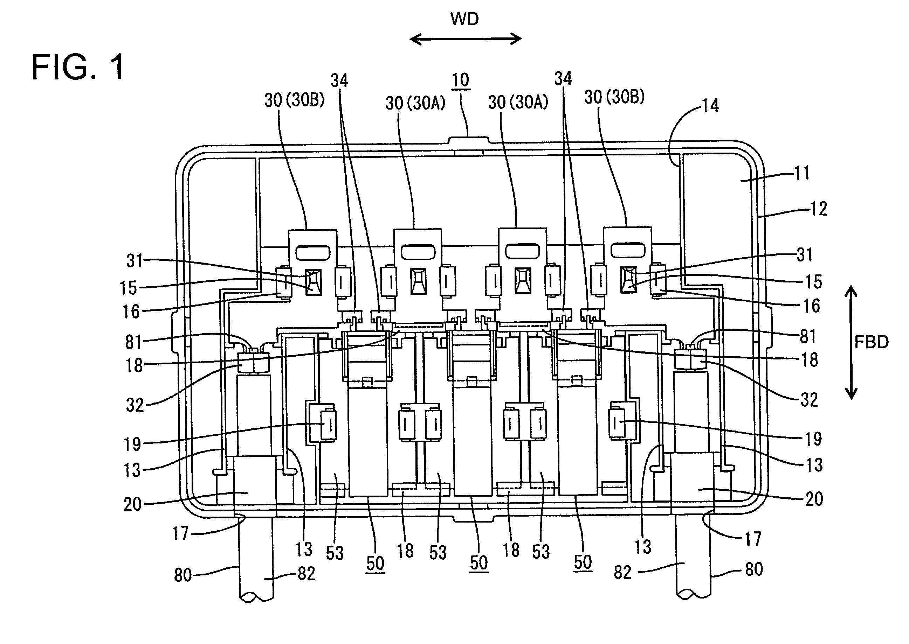

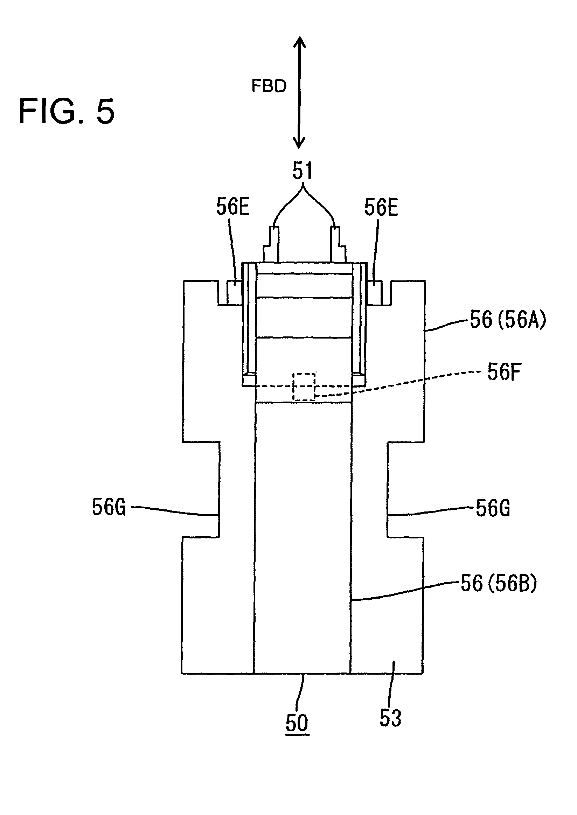

A first preferred embodiment of the present invention is described with reference to FIGS. 1 to 6. A terminal box for a solar battery module according to this embodiment is mounted or mountable on a side (preferably substantially the underside) of a solar battery module (not shown) having a multitude of solar battery cells connected in series arranged on the outer surface thereof, and is provided with a box main body 10, a multitude of terminal plates 30 substantially juxtaposed in the box main body 10, and one or more rectifying-device units 50 spanning between adjacent terminal plates 30. In the following description, upper side of FIG. 1 (i.e. a side opposite to a side where cables 80 to be described later are drawn out) is referred to as front side concerning forward and backward directions FBD.

The box main body 10 is made e.g. of a synthetic resin material substantially into a box shape having an open lateral (upper) surface, has insulating resin at least partly filled inside and has a cover 70 mounted or mountable e.g. substantially from above to at least partly cover the opening. More specifically, the box main body 10 is comprised of a (preferably substantially rectangular) base plate 11 on which a plurality of terminal plates 30 are arranged preferably substantially side by side, a side plate 12 standing up or projecting from the outer peripheral edge or edge portion of the base plate 11 to at least partly surround the base plate 11 and one or more partition walls 13 standing up or projecting from specified (predetermined or predeterminable) positions of the base plate 11 as shown in FIG. 1. A laterally long (preferably substantially rectangular) opening 14 is formed at one end of the base plate 11, and respective portions (preferably the leading ends) of a plurality of terminal plates 30 are to be located in this opening 14. Leads (not shown) to be connected with positive and negative electrodes of the solar battery module are at least partly introduced through the opening 14 of the base plate 11, and are to be connected with the leading ends of the terminal plates 30, for example, by soldering, (ultrasonic) welding, press-fitting, insulation displacement connection or the like.

One or more positioning projections 15 engageable with one or more respective positioning holes 31 of the terminal plates 30 project from the lateral (upper) surface of the base plate 11 substantially in correspondence with the respective terminal plates 30. One or more, preferably a pair of resiliently deformable locking pieces 16 project at the (preferably substantially opposite) outer side(s) of each positioning projection 15. In the process of mounting the terminal plate 30, the respective locking pieces 16 are deformed preferably to widen the spacing therebetween by being engaged with the (preferably substantially opposite) lateral edge(s) of the terminal plate 30. As the terminal plate 30 is properly mounted, the locking piece(s) 16 is/are at least partly restored to press the (preferably substantially opposite) lateral edge(s) of the terminal plate 30 from an opening side or substantially from above, thereby preventing the terminal plate 30 from moving away from the base plate 11 or substantially upward.

Further, one or more positioning walls 18 for positioning one or more terminal plates 30A to be described later are provided on the lateral (upper) or inner surface of the base plate 11. Each positioning wall 18 extends substantially along the widthwise direction WD (or at an angle different from 0° or 180°, preferably substantially normal to the forward and backward directions FBD) of the corresponding terminal plate 30A and is formed at the base end thereof with a receiving groove (not shown) into which the rear end or rear end portion of the terminal plate 30A is at least partly fittable. At the time of being mounted on the base plate 11, the terminal plate 30A has the rear end thereof brought substantially into contact with the back surface of the receiving groove while preferably substantially taking an oblique posture, and is inclined to bring the front end thereof down or toward the base plate 11 in such a state, thereby engaging the positioning hole 31 with the positioning projection 15.

Notches 17 are formed at the opposite ends of the rear side of the side plate 12. Cables 80 for external output are at least partly fitted or inserted into these notches 17 substantially from above and one or more cable pressing members 20 are further at least partly fitted thereinto to fix the respective cables 80, the fitted cable pressing members 20 being integrally or unitarily continuous with the side plate 12.

The terminal plates 30 are formed by cutting or stamping an electrically conductive (preferably metal) plate into a specified (predetermined or predeterminable) shape, such as strips. A plurality, e.g. four terminal plates 30 are arranged preferably substantially side by side in an intermediate portion (preferably substantially in the middle part) of the base plate 11 with respect to forward and backward directions FBD. The terminal plates 30B arranged at the opposite ends of the base plate 11 are or are to be connected with the corresponding cables 80 for external connection. An insulation coating 82 is stripped at an end of each cable 80 to expose a core 81, with which a wire connection portion (preferably comprising a barrel portion 32) formed at an end of the terminal plate 30 is connected (preferably crimped or bent or folded into connection), thereby connecting the cable 80 and the terminal plate 30. It should be noted that an extending end of the cable 80 is connected e.g. with a connector portion or electric/electronic device (not shown).

Each terminal plate 30B connected with the above cable 80 has its front and rear parts offset at an intermediate longitudinal position thereof so as to substantially correspond to the positions of the cable 80 and the lead. The partition walls 13 are formed to at least partly extend substantially along the opposite lateral edges of the terminal plates 30 and the cables 80 so as to define a resin-filling space, and the insulating resin is at least partly filled into the resin-filling space (i.e. onto the terminal plates 30 and the cables 80 located inside the partition walls 13). In this way, there is a merit of saving an amount of filled insulating resin as compared to a case where the insulating resin is filled into the entire box main body 10.

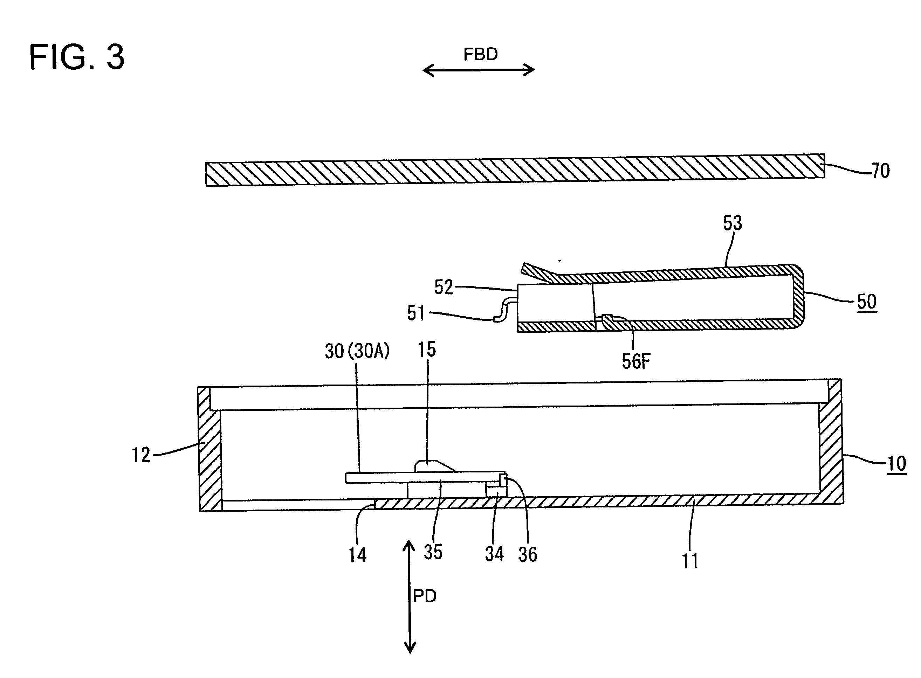

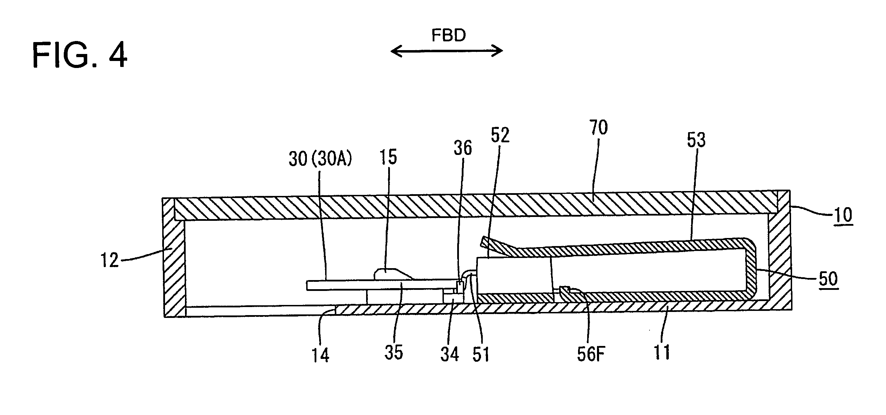

One or more, e.g. two terminal plates 30A not connected with the cables 80 are arranged substantially in the intermediate portion (preferably substantially the middle) of the lateral (upper) or inner surface of the base plate 11, i.e. are arranged between the terminal plates 30A. Each terminal plate 30 is engageable with the positioning wall 18 and the positioning projection 15 provided on the base plate 11 at two positions spaced apart along forward and backward directions FBD, and is securely prevented from making loose movements substantially along a plane direction by this engagement. The respective terminal plates 30 are also provided with one or more attachment portions 34 bulging out sideways, and one or more conductor pieces 51 (to be described later) of the rectifying-device units 50 are to be at least partly placed on the (respective upper) surfaces of the attachment portions 34 and connected therewith preferably by soldering, (ultrasonic) welding, press-fitting. The attachment portions 34 are arranged at positions slightly lower (or displaced substantially along a plane direction PD of the plane substantially containing the terminal plates 30 or the main portion 35 and/or the attachment portion 34) than main portions 35 to be connected with the leads so as to substantially correspond to the positions of the conductor pieces 51 as shown in FIGS. 3 and 4. One or more, preferably a pair of protrusions 36 for guiding the conductor piece 51 are provided on the upper surface of each attachment portion 34.

Each rectifying-device unit 50 arranged between adjacent terminal plates 30 is comprised of a bypass diode 52 (corresponding to a preferred rectifying device preferably for bypass at the time of an inverse load) preferably for preventing the reverse flow of a current, and a clip 53 (corresponding to a preferred heat discharging member) for resiliently holding this bypass diode 52.

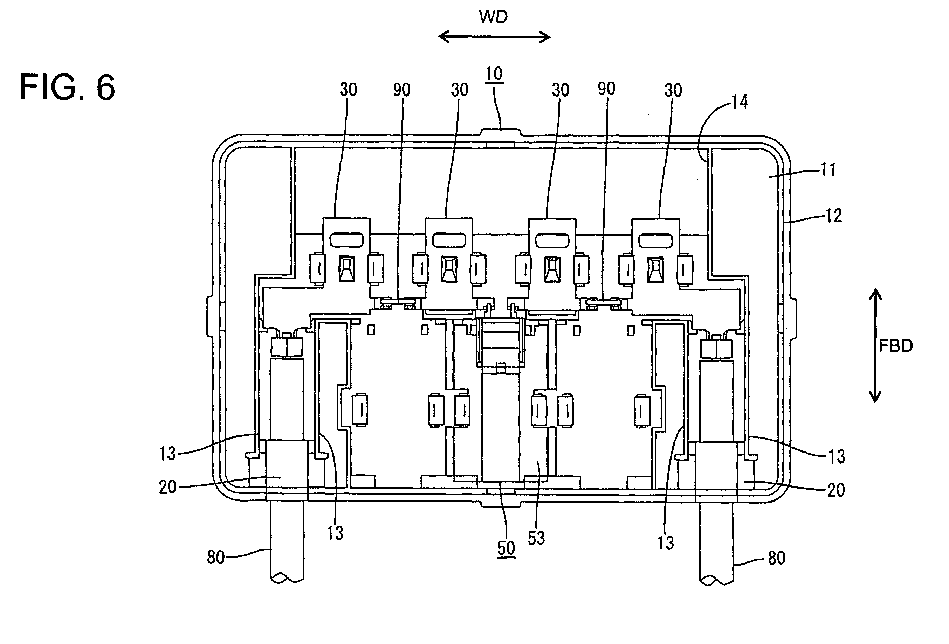

Although three rectifying-device units 50 are provided in the shown case, the number of the rectifying-device units 50 to be mounted is determined in consideration of the volume of the terminal box for the solar battery module and other factors and can be suitably changed. For example, out of the four terminal plates 30, two pairs of terminal plates 30 located at the opposite ends of the base plate 11 may be electrically connected with the adjacent terminal plate 30 by one or more jumper pins 90 and the rectifying-device unit 50 may span only between one pair of terminal plates 30 located in an intermediate position (preferably substantially in the middle) as shown in FIG. 6. Then, the number of the bypass diodes 52 is reduced to suppress a temperature increase, and a heat transfer property is better by transferring heat by way of the terminal plates 30. Of course, out of the four terminal plates 30, two pairs of terminal plates 30 located at the opposite ends of the base plate 11 may be connected with the adjacent terminal plate 30 via the rectifying-device units 50 and one pair of terminal plates 30 located in the middle may be connected via the jumper pin.

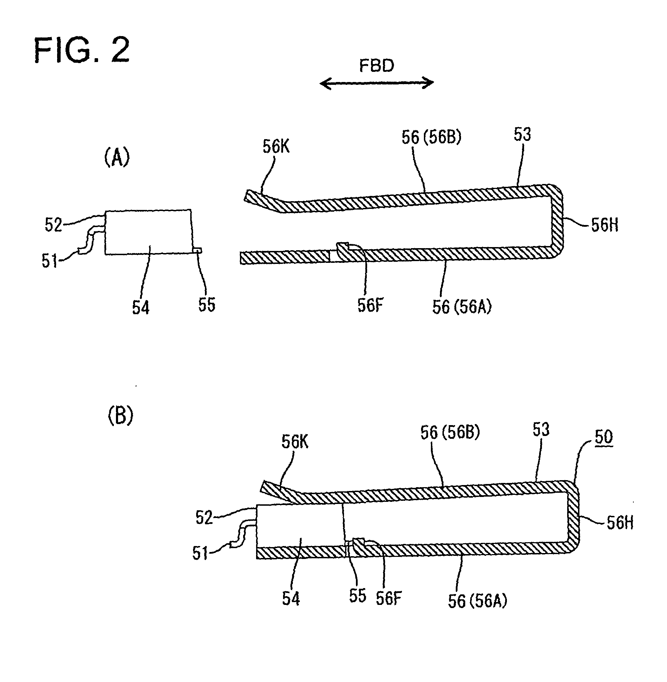

As shown in FIG. 2(A), the bypass diode 52 includes a resin-molded portion 54 preferably having a substantially rectangular parallelepipedic shape, a pair of conductor pieces 51 (corresponding to a P-area (anode side) and an N-area (cathode side), respectively) projecting substantially from (preferably substantially the middle of) the front end surface of the resin-molded portion 54 and connected or connectable with the corresponding terminal plates 30 preferably by soldering, welding, press-fitting or the like, and a heat discharging plate 55 (corresponding to the N-area (cathode side)) arranged such that a part thereof projects backward from the bottom edge of the rear end surface of the resin-molded portion 54 and the remaining most part is substantially exposed at the bottom surface of the resin-molded portion 54. A pair of conductor pieces 51 are bent at an angle different from 0° or 180°, preferably substantially at right angles at one or more position, e.g. twice after substantially horizontally projecting (or projecting substantially in parallel with the terminal plates 30) from one end surface of the resin-molded portion 54, whereby the leading ends thereof reach a position substantially at the same height as the bottom surface of the resin-molded portion 54 and face in a direction away from the resin-molded portion 54 or substantially parallel to the terminal plates 30.

The clip 53 is formed by applying bending, folding, embossing or the like to an electrically conductive (preferably metal) plate of, e.g. an oxygen free copper stamped or cutting out into a specified (predetermined or predeterminable) shape, and preferably is substantially symmetrically shaped as a whole with respect to an axis extending substantially along forward and backward directions FBD. More specifically, by having one or more, preferably a pair of supporting pieces 56 facing each other, the clip 53 is formed to have a substantially U-shaped cross section and can resiliently hold or clamp the bypass diode 52 between the leading ends or end portions of the supporting pieces 56 as shown in FIGS. 2 to 5. The lower one 56A (i.e. the one closer to the base plate 11) of the respective supporting pieces 56 to be at least partly held in contact with the bottom surface of the bypass diode 52 has a length substantially along forward and backward directions FBD, which preferably is more than about twice, more preferably about four times the corresponding dimension of the bypass diode 52, and extends backward until the rear end thereof reaches the rear end of the base plate 11.

The lower supporting piece 56A has a width which preferably is greater than, more preferably about twice the width of the bypass diode 52. One or more lateral displacement preventing pieces 56E for preventing loose movements of the bypass diode 52 preferably along widthwise direction WD by being held in contact with the (preferably substantially opposite) side surface(s) of the bypass diode 52 are formed at or near the front edge of the lower supporting piece 56A preferably by cutting and bending. Further, a stopper piece 56F for preventing a backward movement of the bypass diode 52 by being held substantially in contact with the rear end of the heat discharging plate 55 is formed in a widthwise intermediate position (preferably substantially in the middle) of the lower supporting piece 56A preferably by cutting and bending. Substantially U-shaped notches 56G are formed at the opposite lateral edges of the lower supporting piece 56A, and engageable portions 19 projecting from the base plate 11 are engageable with (preferably at least partly fittable or insertable into) these notches 56G. The engageable portions 19 are brought or bringable into contact with edge portions (corresponding to preferred engaging portions) of the notches 56G in the process of mounting the rectifying-device unit 50 onto the base plate 11, thereby being resiliently deformed. As the lower supporting piece 56A is at least partly placed on or near the base plate 11, the engageable portions 19 are at least partly restored to come into contact with the upper or substantially opposite surfaces of the edge portions of the notches 56G, with the result that upward movements (i.e. movements substantially away from the base plate 11) of the rectifying-device unit 50 can be prevented.

An intermediate coupling portion 56H is formed to stand up or project (at an angle different from 0° or 180°, preferably substantially normal) at an intermediate position (preferably substantially a middle part) of the rear edge portion of the lower supporting piece 56A, and the upper supporting piece 56B to be brought into contact with the upper surface of the bypass diode 52 extends forward (or at an angle different from 0° or 180°, preferably substantially normal) from the upper or distal end of the intermediate coupling portion 56H. The intermediate coupling portion 56H and the upper supporting piece 56B preferably are formed to be slightly narrower than the bypass diode 52. Further, the upper supporting piece 56B is moderately sloped down (or toward the base plate 11 or the lower supporting piece 56A) toward the front from the intermediate coupling portion 56H and held substantially in contact with the bypass diode 52 at an end of the sloped-down part thereof, from which end the upper supporting piece 56B is sloped up or away from the lower supporting piece 56A, thereby widening the spacing to the lower supporting piece 56A. This sloped-up leading end portion of the upper supporting piece 56B serves as a guiding portion 56K for guiding the bypass diode 52 and/or for guiding a resilient deformation of the supporting piece 56. Spacing between the end of the sloped-down part 56K of the upper supporting piece 56B and the lower supporting piece 56A in a natural state is set to be slightly shorter than the height or corresponding dimension of the bypass diode 52.

One or more positioning walls 18 project at the rear end or lateral end portion of the base plate 11, and the opposite ends of the rear end of the lower supporting piece 56A are at least partly fittable or insertable into receiving grooves (not shown) formed at the base ends of the positioning walls 18. At the time of being mounted onto the base plate 11, the rectifying-device unit 50 preferably is held in an oblique posture to bring the opposite ends of the rear end of the lower supporting piece 56A into contact with the bottom surface of the receiving groove, and is inclined to bring the front end of the lower supporting piece 56A down or towards the base plate 11 in such a state, thereby placing the pair of conductor pieces 51 at least partly onto the corresponding terminal plates 30.

Next, a method for producing this embodiment and functions and effects of this embodiment are described. First, the wire connection portions (preferably the barrel portions 32) of the terminal plates 30 are connected (preferably crimped or bent or folded into connection) with the cores 81 exposed at the ends of the corresponding cables 80, thereby connecting the terminal plates 30 and the cables 80. Subsequently, the terminal plates 30 are at least partly placed and fixed on or to the base plate 11. At this time, the one or more positioning projections 15 provided on the base plate 11 are at least partly inserted into the respective positioning holes 31 of the terminal plates 30, thereby positioning the terminal plates 30, and the terminal plates 30 are prevented from making upward movements (or movements substantially away from the base plate 11) by the resilient engagement with the one or more locking pieces 16. Subsequently, the cable pressing members 20 are mounted preferably substantially from above while at least partly covering the cables 80, thereby fixing the cables 80 onto the base plate 11. Further, the terminal plates 30A not connected with the cables 80 have the rear ends or distal end portions thereof at least partly fitted into the receiving grooves of the corresponding positioning walls 18.

On the other hand, as shown in FIGS. 2(A) and 2(B), the bypass diode 52 is at least partly fitted or inserted into an opening of each clip 53 preferably substantially along a longitudinal direction thereof or substantially from front to resiliently squeeze or sandwich the bypass diode 52 between the leading ends or leading end portions of a pair of supporting pieces 56A, 56B, thereby forming at least part of the rectifying-device unit 50. At this time, the heat discharging characteristics from the heat discharging plate 55 to the clip 53 may be improved by applying soldering and/or providing a metal-made heat discharging pat member between the heat discharging plate 55 of the bypass diode 52 and the lower supporting piece 56A of the clip 53 (i.e. providing a heat exchange improving structure for improving the heat exchange between the heat discharging plate 55 of the bypass diode 52 and the clip 53). Subsequently, the opposite ends of the rear end of each lower supporting piece 56A are at least partly fitted into the receiving groove of the corresponding positioning wall 18, each pair of conductor pieces 51 are respectively at least partly placed on the attachment portions 34 of the corresponding terminal plates 30 and preferably soldering is applied thereto to electrically connect the conductor pieces 51 and the terminal plates 30. Of course, other means such as welding is possible for connecting the respective conductor pieces 51 and terminal plates 30. Further, upward movements (i.e. movements substantially away from the base plate 11) of the lower supporting pieces 56A or the rectifying-device units 50 are prevented by the resilient engagement of the lower supporting pieces 56A with the engageable portions 19.

Thereafter, the box main body 10 is mounted to the solar battery module, in particular adhered to the underside of the solar battery module using an adhesive double coated tape or secured thereto using bolts. In the mounting process, the leads connected with the electrodes of the solar battery module are drawn at least partly into the box main body 10 through the opening 14 of the base plate 11 and connected with the leading ends of the terminal plates 30 by soldering. Then, the insulating resin such as a silicone resin is at least partly filled onto the ends of the terminal plates 30 and the cables 80 inside the partition walls 13 (i.e. within the resin filling space), and the cover 70 is mounted to substantially close the box main body 10. The crimp-connected parts, the solder-connected parts and the like connected parts thus are preferably sealed airtight by the insulating resin. Further, by mounting the cover 70, the cable pressing members 20 are pressed against the base plate 11 by the rear surface of the cover 70.

As described above, since the metal-made clip 53 is provided to hold the bypass diode 52 in contact therewith according to this embodiment, the heat generated by the bypass diode 52 can be efficiently discharged by way of the clip 53. Further, since the bypass diode 52 and the clip 53 are integrally united into the rectifying-device unit 50, the mountability thereof onto the base plate 11 is better.

Since the clip 53 has a pair of supporting pieces 56A, 56B to resiliently hold or clamp or sandwich the bypass diode 52, not only the above bypass diode 52, but also a plurality of kinds of bypass diodes having different sizes can be handled, which leads to better versatility.

Further, upon mounting the rectifying-device unit 50, it is sufficient to resiliently engage the edge portions of the notches 56G of the lower supporting piece 56A with the engageable portions 19 while at least partly fitting or inserting the rear end of the lower supporting piece 56A into the receiving groove of the positioning wall 18. Thus, the rectifying-device unit 50 can be mounted on the base plate 11 through a one-touch operation, thereby reducing an operation load.

Furthermore, since one clip 53 is provided for each bypass diode 52 (i.e. there preferably exists a one-to-one relationship), the rectifying-device units 50 can be mounted on the base plate 11 in more diverse manners as also shown in FIG. 6 as compared to a case where a plurality of bypass diodes 52 are held by one clip 53.

### <Reference Example>

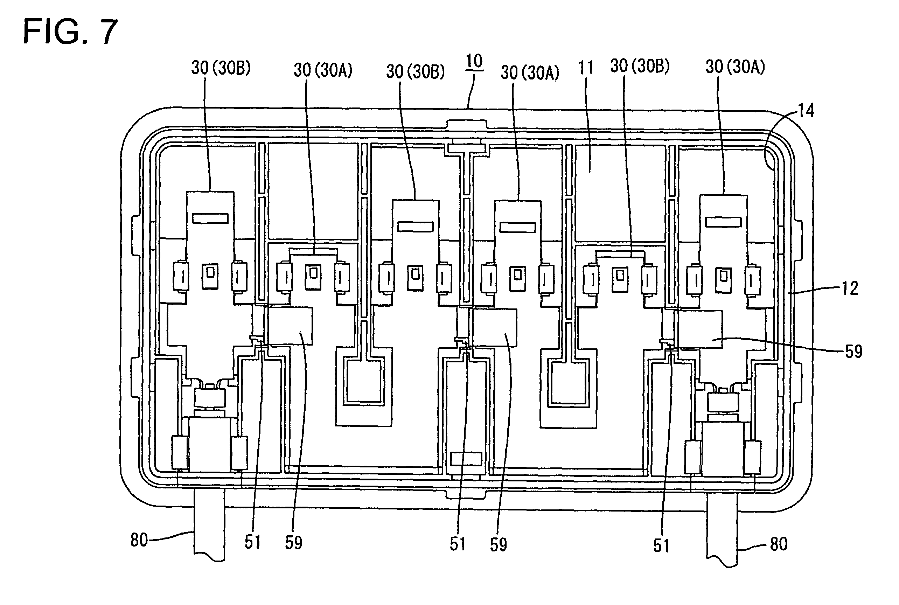

FIG. 7 shows a reference example of the present invention. A bypass diode 59 used in this reference example is formed by cutting off one conductor plate 51 corresponding to the N-area (cathode side) out of a pair of conductor plates 51 in the bypass diode 52 of the foregoing embodiment.

Specifically, this bypass diode 59 has a heat discharging plate (not shown) corresponding to the N-area (cathode side) on the bottom surface thereof and one conductor plate 51 corresponding to the P-area (anode side) on one end surface thereof, and spans between adjacent terminal plates 30 with the one end surface faced leftward. In the shown case, three bypass diodes 50 are arranged in series while crossing or bridging the respective terminal plates 30. The heat discharging plate and the leading end of the conductor plate 51 are connected with the corresponding terminal plates 30A, 30B while at least partly being directly placed on one of the adjacent terminal plates 30A and directly placed on the other terminal plate 30B, respectively.

According to this reference example, heat generated by the bypass diode 59 can be directly discharged from the heat discharging plate to the terminal plate 30A. Thus, heat discharging characteristics are better as compared to prior art bypass diodes on which heat discharging plates are placed on base plates.

Accordingly, to ensure good heat discharging characteristics, a terminal box for a solar battery module is provided with a plurality of terminal plates 30 (preferably substantially juxtaposed) on a base plate 11 and connectable with positive and negative electrodes of the solar battery module, cables for external connection connectable with the terminal plates 30, and one or more rectifying-device units 50 each of which spans between two corresponding adjacent terminal plates 30. Each rectifying-device unit 50 includes a bypass diode 52 connectable with the two corresponding terminal plates 30 preferably to prevent an inverse current, and a heat conductive (preferably metal-made) clip 53 for resiliently holding the bypass diode 52. The clip 53 is held in contact with a heat discharging plate 55 of the bypass diode 52 to discharge heat generated by the bypass diode 52.

### <Second Embodiment>

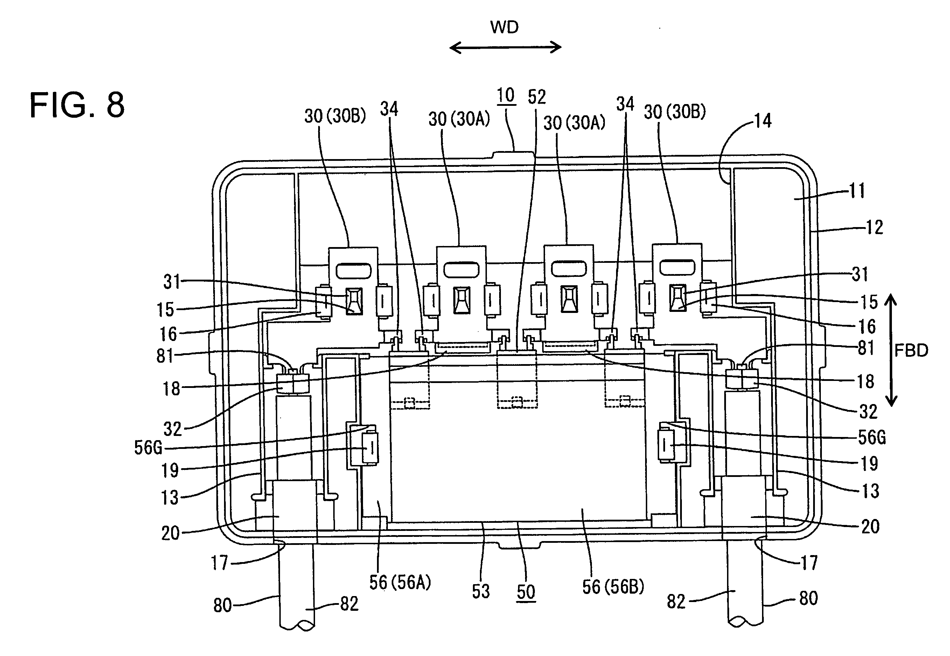

FIG. 8 shows a second preferred embodiment of the invention. The second embodiment differs from the first embodiment in that one metal-made clip 53 holds a plurality of bypass diodes 52 collectively.

Specifically, the clip 53 of the second embodiment has such a shape as if the clip 53 of the first embodiment were so widened substantially along the width direction WD as to be able to hold a plurality of (three in the shown case) bypass diodes 52 arranged along the widthwise direction WD or substantially side by side collectively, and includes a pair of wide supporting pieces 56. An area of the upper surface of a base plate 11 behind an intermediate portion (preferably substantially a middle part) with respect to forward and backward directions FBD, i.e. an area thereof behind the arranged positions of terminal plates 30 serves as a placing surface on which the clip 53 is to be placed. One or more engageable portions 19 project at one or more (e.g. two) positions at the (preferably substantially opposite) side(s) of this placing surface.

A rectifying-device unit 50 is formed by resiliently holding a plurality of bypass diodes 52 between a pair of supporting pieces 56 collectively. The engageable portions 19 at least partly are resiliently fitted or inserted into notches 56G of the lower supporting piece 56A in the process of placing the rectifying-device unit 50 on the base plate 11. As the rectifying-device unit 50 is placed on or neat the base plate 11, the engageable portions 19 are resiliently brought into contact with edge portions of the notches 56G, thereby being able to prevent upward movements (i.e. movements substantially away from the base plate 11) of the rectifying-device unit 50. The other construction is substantially similar to that of the first embodiment and no repeated description is given here.

Since a plurality of bypass diodes 52 are collectively held by one clip 53 according to the second embodiment, it is not necessary to prepare one clip 53 for each bypass diode 52 unlike the first embodiment. Further, the bypass diodes 52 can be easily mounted.

### <Third Embodiment>

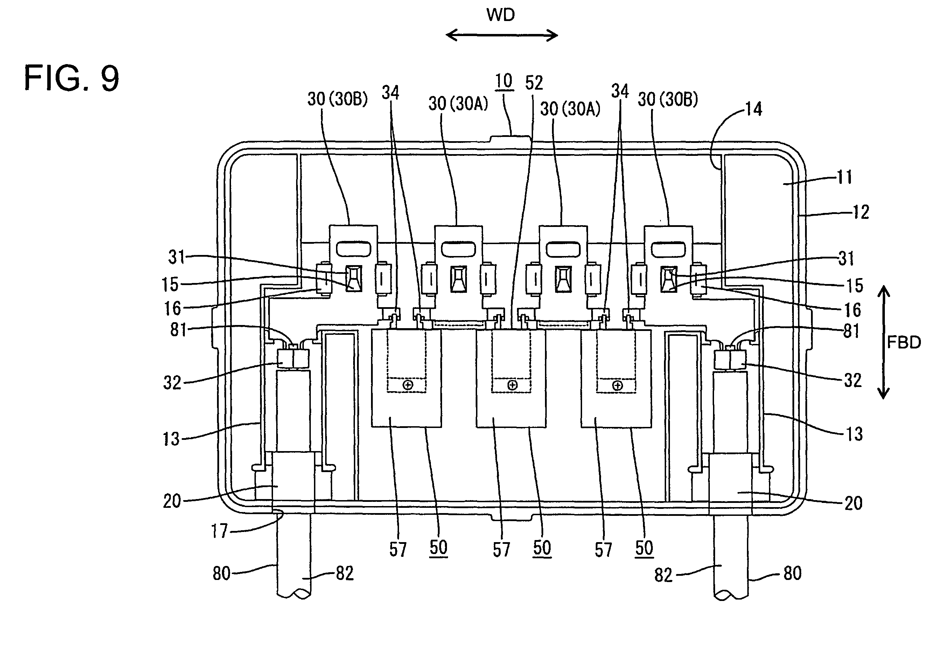

FIGS. 9 to 11 show a third preferred embodiment of the invention. The third embodiment differs from the first and second embodiments in that a pair of divided members 57 are used as such corresponding to the heat discharging member of the present invention.

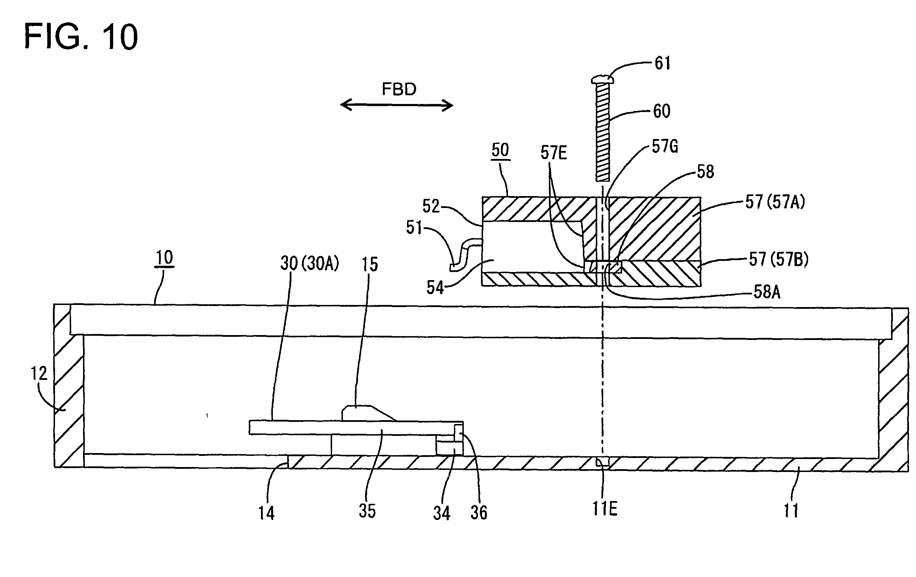

A pair of divided members 57 are formed of a metal (preferably of an aluminum) or a material having good heat transfer characteristics or conductivity into blocks, and the bypass diode 52 can be tightly held between the facing surfaces of the two divided members 57 along thickness direction TD by uniting the two divided members 57. One 57A of the two divided members 57 can be at least partly held substantially in contact with the first (upper) surface of the bypass diode 52 and the other 57B thereof can be at least partly held substantially in contact with the second substantially opposite (bottom) surface of the bypass diode 52 as shown in FIG. 10.

The inner wall of the one divided member 57A is formed with a holding surface 57E capable of being closely held in contact with a stepped part, which preferably is a substantially right-angled part between the upper surface and the rear surface portion of the resin-molded portion 54 of the bypass diode 52. The inner wall of the other divided member 57B is formed with a holding surface 57E capable of being closely held in contact with a stepped part, which is an angled part angled at an angle different from 0° or 180°, preferably a substantially right-angled part between the bottom surface and the rear or lateral surface of a mount portion 58 bulging out from the bypass diode 52. Boundary surfaces of the two divided members 52 are substantially horizontal surfaces (or surfaces substantially parallel to the base plate 11) including the upper surface of the mount portion 58. The front surface of the resin-molded portion 54 of the bypass diode 52 is exposed without being covered by the two divided members 57, so that a pair of conductor pieces 51 can project out. This front surface and the front surfaces of the two divided members 57 preferably are substantially in flush and continuous with each other.

The two divided members 57 preferably are substantially in the form of a rectangular parallelepiped as a whole in such a state as to hold the bypass diode 52, ad the length thereof along forward and backward directions FBD is set to be greater than, preferably about twice, the length of the bypass diode 52 along forward and backward directions FBD. The two divided members 57 are also formed with through holes 57G which substantially vertically and/or coaxially extend from one divided member 57A to the other 57B when the two divided members 57 are united. The through holes 57G can also communicate with a mount hole 58A already formed in the mount portion 58 of the bypass diode 52.

Accordingly, when the two divided members 57 tightly hold the bypass diode 52, the through holes 57G and the mount hole 58A substantially coaxially extend and a screw member 60 is at least partly inserted or insertable through these substantially coaxially arranged holes 57G, 58A. The leading end of the screw member 60 is screwed into a (preferably bottomed) internally threaded hole 11E (corresponding to a preferred screw receiving portion) formed in the base plate 11, whereby the bypass diode 52 is or can be fastened between a head 61 of the screw member 60 and the base plate 11 via the two divided members 57.

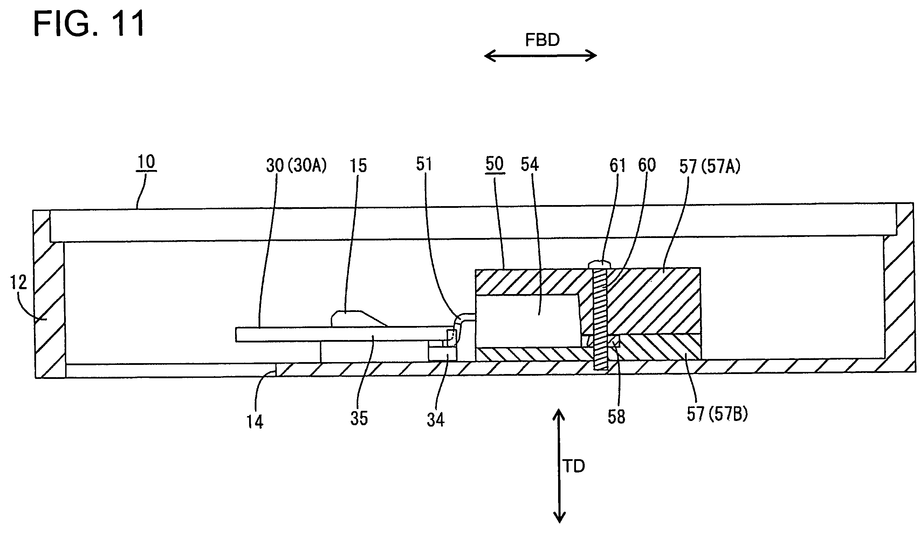

In the third embodiment, the rectifying-device unit 50 formed by tightly holding the bypass diode 52 between the two divided members 57 is placed on or near the base plate 11, the screw member 60 is at least partly inserted through the through holes 57G and the mount hole 58A and the leading end of the screw member 60 is screwed into the internally threaded hole 11 E of the base plate 11, whereby the rectifying-device unit 50 is or can be fixed or mounted on the base plate 11 and the bypass diode 52 is held by the two divided members 57 as shown in FIG. 11. At this time, since the holding surfaces 57E of the two divided members 57 are so shaped as to extend substantially along the preexisting stepped portions of the bypass diode 52 and can be held in contact therewith, a heat discharging area is increased by as much as the contact of the two divided members 57 with such stepped parts, joining strength of the bypass diode 52 and the two divided members 57 can be increased. As a result, heat discharging characteristics become better and, in addition, the bypass diode 52 can be securely held along thickness direction TD.

Further, since the two divided members 57 preferably are made of a metal or a material having a high heat conductivity such as preferably an aluminum, heat discharging characteristics become even better.

### <Fourth Embodiment>

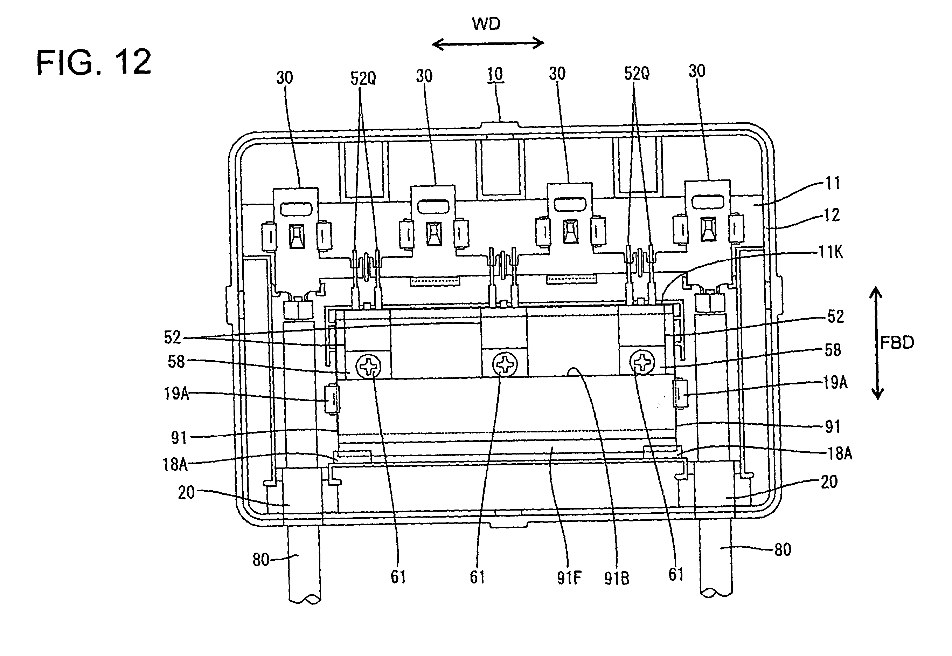

FIGS. 12 to 14 show a fourth preferred embodiment of the present invention. The fourth embodiment is similar to the third embodiment in that the bypass diode 52 is screwed to a metal block 91 as a preferred heat discharging member, but differs therefrom in that the leading end of the screw member 60 does not reach the base plate 11. Further, the fourth embodiment has no part corresponding to the one 57A of the divided members 57 of the third embodiment.

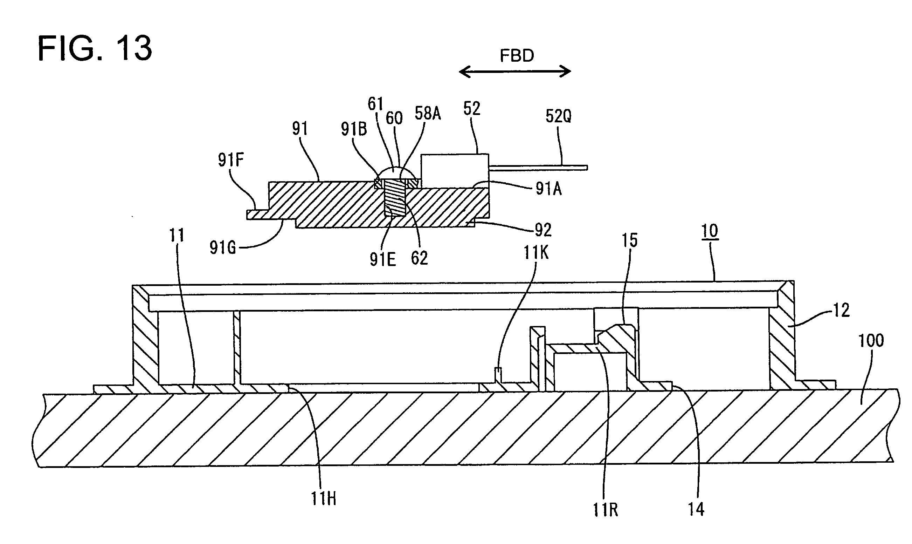

The metal block 91 as the preferred heat discharging member in the fourth embodiment is made of a material having a high thermal or heat conductivity such as a metal, preferably of an aluminum or a copper-aluminum alloy, and one or more, e.g. three, bypass diodes 52 arranged preferably substantially side by side can be collectively fixed thereto. A front side of the upper surface of the metal block 91 serves as a placing surface 91A on which the bypass diodes 52 are to be at least partly placed as shown in FIG. 13. This placing surface 91 is located at a position slightly lower than a rear side of the upper surface of the metal block 91 via a stepped portion 91 B, which is formed on a substantially straight line extending along widthwise direction WD. The mount portions 58 bulging out from the bypass diodes 52 are at least partly brought into contact with the stepped portion 91 B to be positioned.

The front end surfaces of the bypass diodes 52 preferably are substantially in flush and continuous with the front end surface of the metal block 91 when the bypass diodes 52 are placed substantially on the placing surface 91A of the metal block 91. Further, the front end surface of the metal block 91 is caused to substantially face a restricting wall 11 K projecting from the upper surface of the base plate 11, whereby the metal block 91 can be positioned with respect to forward direction.

Each bypass diode 52 is mountable on the metal block 91 via the screw member 60 at least partly inserted through the mount hole 58A already existing in the mount portion 58. The mount hole 58A of the mount portion 58 is substantially alignable with a (preferably bottomed) internally threaded hole 91 E formed in the placing surface 91A of the metal block 91. A leading end portion 62 of the screw member 60 is screwed into the internally threaded hole 91 E from the mount hole 58A, whereby the mount portion 58 is squeezed or sandwiched or held between the head 61 of the screw member 60 and the metal block 91. As a result, the bypass diode 52 is mounted on the metal block 91.

A thin protruding portion 91 F bulges out backward from the bottom edge of the rear end surface of the metal block 91. As shown in FIG. 12, a pair of positioning walls 18A are provided at positions on the inner or upper surface of the base plate 11 substantially corresponding to the lateral (left and right) edges (or widthwise edges) of the protruding portion 91 F. The positioning walls 18A extend substantially along widthwise direction WD, and receiving grooves (not shown) into which the lateral (left and right) or widthwise edges of the protruding portion 91 F are at least partly fittable are formed at the base ends of the these positioning walls 18A. Further, the lateral (left and right) or widthwise edges 91 ED of a main part of the metal block 91 preferably are hooked by resiliently deformable resilient receiving portions 19A projecting from the upper or inner surface of the base plate 11. The resilient receiving portions 19A have a function similar to that of the aforementioned engageable portions 19.

As shown in FIG. 13, a heat discharging block 91 projecting substantially downward or toward the base plate 11 from a placing surface 91 G to be at least partly placed on or near the base plate 11 via steps is provided on the bottom surface of the metal block 91. Further, the base plate 11 is formed with a recess or through hole 11 H for permitting the at least partial entrance of the heat discharging block 92, the through hole 11 H preferably communicating with the underside of a solar battery module 100. The heat discharging block 92 preferably is closely engageable with the edges of the through hole 11 H preferably substantially along widthwise direction WD. A projecting distance of the heat discharging block 92 is substantially equal to the thickness of the base plate 11, and a projecting end surface (bottom surface) thereof is located at or near the bottom surface of the base plate 11 so that it preferably can be directly held in contact with (preferably the underside of) the solar battery module 100.

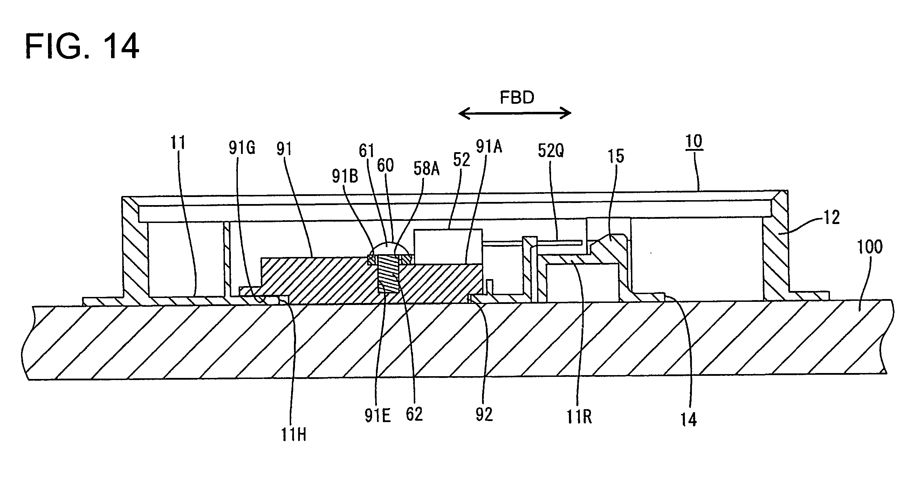

Next, functions of the fourth embodiment are described. The bypass diodes 52 are first at least partly placed on the placing surface 91A of the metal block 91 with the mount portions 58 thereof held substantially in contact with the stepped portion 91 B of the metal block 91. Subsequently, the screw members 60 are at least partly screwed down into the mount holes 58A of the mount portions 58 and the internally threaded holes 91 E of the metal block 91 (preferably substantially from above), thereby fixing the bypass diodes 52 to the metal block 91. Then, the heat discharging block 92 of the metal block 91 is at least partly fitted into the through hole 11 H of the base plate 11 while the protruding portion 91 F of the metal block 91 is at least partly fitted into the receiving grooves of the positioning walls 18A. When being placed on the base plate 11, the metal block 91 can be resiliently held while being prevented from making upward movements (i.e. movements away from the base plate 11) by the resilient receiving portions 19A of the base plate 11. Further, when the metal block 91 is placed on the base plate 11, a pair of the conductor pieces 52Q substantially horizontally projecting (or projecting substantially along the forward and backward directions FBD or parallel to the base plate 11) from the front end surface of each bypass diode 52 are placed on the attachment portions 34 of the corresponding terminal plates 30. If soldering preferably is applied here, the conductor pieces 52Q and the attachment portions 34 are electrically connected. As shown in FIG. 14, a terminal mount 11 R of the base plate 11 is raised from a reference surface of the base plate 11 so as to substantially correspond to the height position of the pair of horizontally projecting pieces 52Q.

Since the bypass diodes 52 are screwed to the metal block 91 according to the fourth embodiment, the bypass diodes 52 and the metal block 91 can be strongly joined. An effect brought about by such screwing is similarly displayed even in such a mode where the metal block 91 has no heat discharging block 92 and the base plate 11 is formed with no through hole 11 H. Further, the third embodiment may be constructed such that the leading end of the screw member 60 does not reach the base plate 11, but the positioning walls 18A and the resilient receiving portions 19A of the fourth embodiment are provided instead.

Since the base plate 11 is formed with the through hole 11 H and the heat discharging block 92 of the metal block 91 preferably can at least partly enter this through hole 11 H, heat generated by the bypass diodes 52 can be efficiently discharged toward the solar battery module 100 via the heat discharging block 92.

Further, since the projecting end surface of the heat discharging block 92 is located at the bottom surface of the base plate 11, the heat generated by the bypass diodes 52 can be directly discharged from the heat discharging block 92 toward the solar battery module 100.

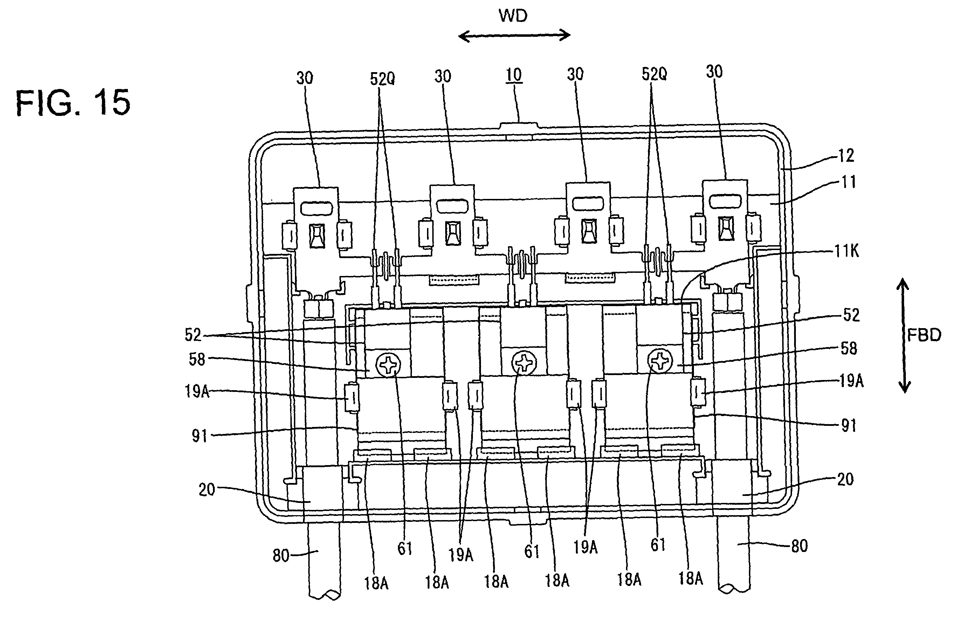

As shown in FIG. 15, one metal block 91 may be provided for each bypass diode 52 using a technique similar to the application of the first embodiment to the second embodiment. Alternatively, one metal block 91 may be provided for one bypass diode 52 and the clips 53 of the first embodiment or pairs of the divided members of the third embodiment may be provided in correspondence with the other bypass diodes 52, thereby adopting a hybrid mode.

### <Fifth Embodiment>

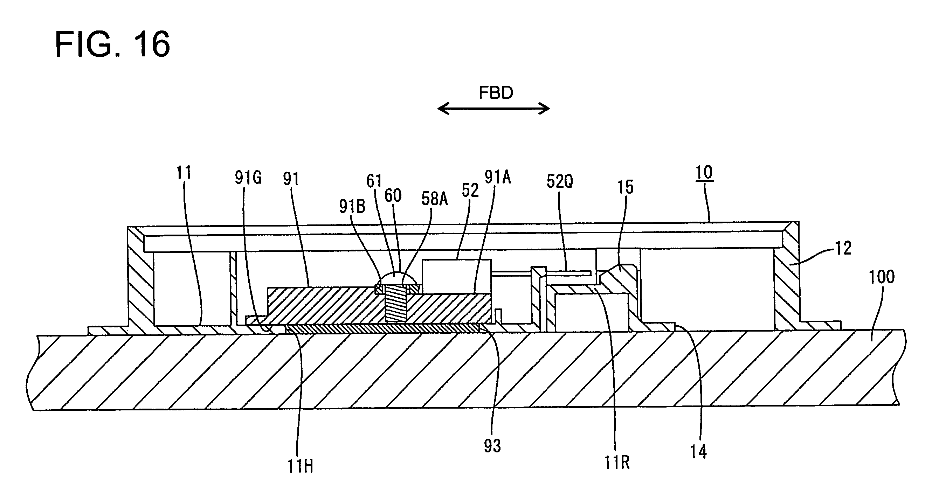

FIG. 16 shows a fifth embodiment of the present invention. The fifth embodiment is substantially identical to the fourth embodiment except that the metal block 91 is not integrally or unitarily formed with the heat discharging block 92 and a member different from the heat discharging block 92 is located in the through hole 11 H of the base plate 11.

In the fifth embodiment, the bottom surface of the metal block 91 is a (preferably substantially flat) surface extending substantially along the upper surface (reference surface) of the base plate 11. Accordingly, a surface contact can be achieved (directly or indirectly) between the metal block 91 and the base plate 11 thus leading to an improved heat exchange and dissipation in particular away from the bypass-diode unit(s) 50. An adhesive 93 having a good heat conductivity such as a ceramic adhesive applied to the bottom surface of the metal block 91 is allowed to flow into the through hole 11 H of the base plate 11 and to solidify therein.

Thus, heat generated by the bypass diodes 52 is efficiently discharged toward the solar battery module 100 via the adhesive 93 having a good heat conductivity.

### <Other Embodiments>

The present invention is not limited to the above described and illustrated embodiments. For example, the following embodiments are also embraced by the technical scope of the present invention as defined by the claims. Beside the following embodiments, various changes can be made without departing from the scope and spirit of the present invention as defined by the claims.
(1) Although the clip resiliently holds the package-type diode(s) in the first and second embodiments, it may resiliently hold bare chip diode(s) according to the present invention.
(2) In the present invention, it is sufficient for the metal-made heat discharging member to hold the bypass diode(s) in contact. For example, a bag-shaped metal-made heat discharging member may wrap the bypass diode(s) in contact.
(3) Although the through holes are so formed as to be able to communicate with the mount hole of the bypass diode in the third embodiment, it is sufficient for the through holes to substantially coaxially penetrate the two divided members and the through holes do not necessarily communicate with the mount hole according to the present invention. Of course, if the through holes communicate with the mount hole, the bypass diode can be more securely held since the screw member is inserted through the mount hole.
(4) Although the heat discharging member has a separable construction by including a pair of divided members in the third embodiment, it may be one inseparable block body having a mounting portion for the bypass diode according to the present invention. For example, this block body may be a lower block body that can be held substantially in contact only with the bottom surface of the bypass diode or an upper block body that can be held substantially in contact only with the upper surface of the bypass diode. Alternatively, the block body may be such as having a U-shaped mounting portion capable of accommodating the bypass diode. In this case, the respective block bodies are preferably made of a metal, more preferably of an aluminum or an aluminum alloy.
(5) According to the present invention, it is sufficient for the heat discharging member to be mountable to the bypass diode using an existing part (e.g. stepped part or mount hole described in the third embodiment) of the bypass diode. For example, the above respective block bodies may be provided with boss portions at least partly insertable into the mount holes of the bypass diodes, and may be joined with the bypass diodes using these boss portions.
(6) According to the present invention, the heat discharging member may be provided with a fin for discharging heat generated by the bypass diode toward the solar battery module. Such a fin can be formed, for example, by embossing one surface of the heat discharging member. This increases a heat discharging outer surface area and results in a better air flow. Thus, a temperature increase of the bypass diode can be more efficiently suppressed.

### LIST OF REFERENCE NUMERALS

- 10: box main body
- 11: base plate
- 11E: internally threaded hole (screw receiving portion)
- 12: side plate
- 13: partition wall
- 19, 19A: engageable portion
- 30: terminal plate
- 34: attachment portion
- 50: rectifying-device unit
- 52: bypass diode (rectifying device preferably for bypass at the time of an inverse load)
- 53: clip (heat discharging member)
- 56G: notch (engaging portion)
- 57: divided member (heat discharging member)
- 57E: holding surface
- 58: mount portion
- 80: cable
- 91: metal block (heat discharging member)
- 91ED: widthwise or lateral edge portion (engaging portion)

## Claims

1. A terminal box for a solar battery module (100), comprising:
a base plate (11),
a plurality of terminal plates (30) on the base plate (11) and connectable with positive and negative electrodes of the solar battery module (100) via cables (80) for external connection connectable with the terminal plates (30), and
a rectifying-device unit (50) spanning between two corresponding terminal plates (30),
wherein the rectifying-device unit (50) includes at least one rectifying device (52) particularly for bypass at the time of an inverse load, the rectifying device (52) being connectable with each of the two corresponding terminal plates (30), and a heat discharging member (53; 57; 91), being preferably made of metal, for holding the rectifying device (52) in contact therewith.

2. A terminal box according to claim 1, wherein the heat discharging member (53) includes a pair of supporting pieces (56A, 56B) for resiliently holding the at least one rectifying device (52) therebetween.

3. A terminal box according to one or more of the preceding claims,
wherein the rectifying device (52) is packaged by resin sealing (54) with a heat discharging portion (55) at least partly exposed at its outer surface, and the heat discharging member (53; 57; 91) can be brought into contact with the heat discharging portion (55).

4. A terminal box according to one or more of the preceding claims,
wherein the heat discharging member (53; 57; 91) includes at least one engaging portion (56G; 91 ED) resiliently engageable with at least one respective engageable portion (19; 19A) of the base plate (11), and the rectifying-device unit (50) is positionable on the base plate (11) by the resilient engagement of the engaging portion (56G; 91 ED) and the engageable portion (19; 19A).

5. A terminal box according to one or more of the preceding claims,
wherein a plurality of rectifying devices (52) are provided on the base plate (11), and one heat discharging member (53; 57; 91) is provided for each rectifying device (52).

6. A terminal box according to one or more of the preceding claims 1 to 4,
wherein a plurality of rectifying devices (52) are provided on or near the base plate (11) and are collectively held by the one heat discharging member (53; 57; 91).

7. A terminal box according to one or more of the preceding claims,
wherein the rectifying device (52) is at least partly packaged by resin sealing (54), and the heat discharging member (53; 57; 91) is so shaped as to extend substantially along a preexisting stepped part of the rectifying device (52) and has a holding surface (57E) to be abutted against this stepped part.

8. A terminal box according to one or more of the preceding claims,
wherein the rectifying device (52) is at least partly packaged by resin sealing (54), the heat discharging member includes a boss portion to be at least partly inserted into a preexisting hole of the rectifying device (52), and the rectifying device (52) is mounted on the heat discharging member by way of the boss portion.

9. A terminal box according to one or more of the preceding claims,
wherein the heat discharging member (53; 57; 91) includes a pair of divided members (57), and the rectifying device (52) is tightly held between the facing surfaces of the two divided members (57) by uniting the divided members (57).

10. A terminal box according to claim 9, wherein the two divided members (57) are formed with through holes (57G; 58A) substantially coaxially penetrating the divided members (57) in such a state where the rectifying device (52) is held, and a screw member (60) at least partly inserted through the through holes (57G; 58A) can be screwed into a screw receiving portion (11 E) of the base plate (11), thereby fastening the rectifying device (52) by way of the two divided members (57).

11. A terminal box according to one or more of the preceding claims,
wherein the rectifying device (52) is mounted on or to or in the heat discharging member (57; 91) by a screw (60).

12. A terminal box according to one or more of the preceding claims,
wherein a through hole (11 H) is so formed in a surface of the base plate (11) where the heat discharging member (53; 57; 91) is to be placed as to communicate with the solar battery module (100), and a heat transferring portion (92; 93) is at least partly provided inside this through hole (11 H).

13. A terminal box according to claim 12, wherein the heat transferring portion (92; 93) includes a heat discharging block (92) integral or unitary to the heat discharging member (91).

14. A terminal box according to claim 13, wherein an end surface of the heat discharging block (92) substantially faces a surface of the base plate (11) to be mounted on the solar battery module (100).

15. A terminal box according to claim 12, 13 or 14, wherein the heat transferring portion (92; 93) includes an adhesive member (93) having a good heat conductivity.

16. A terminal box according to one or more of the preceding claims,
wherein the heat discharging member is formed with a heat dissipation portion, preferably a fin, for discharging heat.

17. A terminal box according to one or more of the preceding claims,
wherein the heat discharging member (53; 57; 91) is made of an aluminum or an aluminum alloy.

18. A rectifying-device unit (50) to be arranged spanning between two corresponding ones of a plurality of terminal plates (30) on a base plate (11), connectable with positive and negative electrodes of a solar battery module and connectable with cables (80) for external connection, comprising:
a rectifying device (52) particularly for bypass at the time of an inverse load, the rectifying device (52) being connectable with each of the two corresponding terminal plates (30), and
a heat discharging member (53), preferably made of metal, for holding the rectifying device (52) in contact therewith.

19. A rectifying-device unit according to claim 18, wherein the heat discharging member (53) includes a pair of supporting pieces (56A, 56B) for resiliently holding the rectifying device (52) therebetween.

20. A rectifying-device unit according to claim 18 or 19, wherein the rectifying device (52) is packaged by resin sealing (54) with a heat discharging portion (55) at least partly exposed at its outer surface, and the heat discharging member (53) can be brought into contact with the heat discharging portion (55).

21. A method of assembling a terminal box for a solar battery module (100), comprising:
providing a base plate (11),
arranging a plurality of terminal plates (30) on the base plate (11) and connectable with positive and negative electrodes of the solar battery module (100) via cables (80) for external connection connectable with the terminal plates (30), and
providing a rectifying-device unit (50) spanning between two corresponding terminal plates (30), wherein the rectifying-device unit (50) includes at least one rectifying device (52) particularly for bypass at the time of an inverse load, the rectifying device (52) being connected with each of the two corresponding terminal plates (30), and
holding the rectifying device (52) in contact with a heat discharging member (53; 57; 91) being preferably made of metal.
